Europäisches Patentamt

(19) European Patent Office

Office européen des brevets

(11) Veröffentlichungsnummer: **0 111 258**
**B2**

(12) **NEUE EUROPÄISCHE PATENTSCHRIFT**

(45) Veröffentlichungstag der neuen Patentschrift:
**09.01.91**

(51) Int. Cl.⁵: **B 62 D 1/26**

(21) Anmeldenummer: **83112066.2**

(22) Anmeldetag: **01.12.83**

(54) **Gelenktes Radfahrzeug.**

(30) Priorität: **09.12.82 DE 3245598**

(43) Veröffentlichungstag der Anmeldung:
**20.06.84 Patentblatt 84/25**

(45) Bekanntmachung des Hinweises auf die
Patenterteilung:
**30.09.87 Patenblatt 87/40**

(45) Bekanntmachung des Hinweises auf die
Entscheidung u¨ber den Einspruch:
**09.01.91 Patentblatt 91/02**

(84) Benannte Vertragsstaaten:
**FR GB IT NL**

(56) Entgegenhaltungen:
**DE-A-2 127 088**
**DE-A-2 854 147**
**FR-A-1 578 809**
**FR-A-2 405 852**
**FR-A-2 424 169**

(73) Patentinhaber: **MAN Nutzfahrzeuge**
**Aktiengesellschaft**
**Dachauer Strasse 667 Postfach 50 06 20**
**D-8000 München 50 (DE)**

(72) Erfinder: **Krüger, Michael, Dipl.-Ing.**
**Bereiteranger 7**
**D-8000 München 90 (DE)**
Erfinder: **Hörmann, Rudolf**
**D-8061 Pullhausen 42 (DE)**
Erfinder: **Dreher, Gunther, Dipl.-Ing.**
**Überlinger Weg 8**
**D-8000 München 60 (DE)**

Courier Press, Leamington Spa, England.

**Beschreibung**

Die Erfindung betrifft ein gelenktes Radfahrzeug, insbesondere einen Omnibus, gemäß dem Oberbegriff des Anspruchs 1.

Es wurde bereits vorgeschlagen, Omnibusse, die mit der üblichen Lenkung versehen sind, mit einer Zusatzeinrichtung auszustatten, welche die Spurführung in bestimmten Situationen übernimmt. In diesem Fall muß der Fahrer nicht mehr die Fahrtrichtung des Omnibusses bestimmen, sondern kann sich voll auf die Abstandshaltung zum vorrausfahrenden Fahrzeug konzentrieren. Durch solche Maßnahmen ist es möglich, etwa in Stadtzentren Großraum- Omnibusse in dichter Folge auf engstem Raum zu bewegen und somit ein Fahrgastaufkommen zu bewältigen, wie dies ohne Spurführung der Ombibusse nicht einmal annähernd möglich wäre.

Auch auf anderen Gebieten ist es zweckmäßig, Fahrzeuge, welche üblicherweise mit einer eigenen Lenkung versehen sind, in bestimmten Bereichen zwangsweise zu steuern. Es ist beispielsweise möglich. Müllfahzeuge innerhalb einer MüllGroßverbrennungsanlage zwangsweise derart zu steuern, daß diese Fahrzeuge ohne Rangieren unter bester Ausnutzung des zur Verfügung stehenden Raumes bis vor Verbrennungsöfen präzise und mit größtmöglicher Geschwindigkeit gesteuert werden können.

Es sind bereits Fahrzeugsteuerungen bekannt, welche über Meßfühler die jeweilige Istlage des Fahrzeuges relativ zu einer Sollage feststellen, welche etwa durch einen in die Fahrbahn eingelassenen Draht vorgegeben wird. Eine Regelung steuert dann die Istlage des Fahrzeuges derart, daß sie möglichst weitgehend mit der Sollage übereinstimmt.

Solche geregelten Steuerungen sind allerdings sehr aufwendig, zumal sie über umfangreiche Sicherheitsvorkehrungen verfügen müssen, welche wirksam werden, wenn etwa wesentliche Teile der Regelungseinrichtung ausfallen sollten.

Es hat sich deshalb für die Eingans genannten Anwendungsfälle als vorteilhaft erwiesen, für die Fahrspur eine Spurführung vorzusehen, welche aus jeweils einer auf jeder Seite der Fahrzeugspur angeordneten Leitschiene besteht. An jeder Seite des Fahrzeugs ist eine Rolle angebracht, welche fest mit dem Lenkgestänge des Fahrzeugs verbunden ist, aber seitlich die Fahrzeugspur überragt und auf gleicher Höhe wie die zugeordnete Leitplanke angeordnet ist. Läuft eine dieser Rollen seitlich gegen die zugehörige Leitplanke an, dann wirkt die Rolle über den sie tragenden Arm unmittelbar derart auf das Lenkgestänge ein, daß die Lenkräder die Fahrtrichtung des Fahrzeuges korrigieren. In der Praxis ist der Abstand zwischen den Leitplanken einerseits und der Abstand zwischen den beiden Steuerrollen eines Fahrzeuges andererseits derart eng toleriert, daß das Fahrzeug zwischen den beiden Leitplanken wie zwischen Schienen geführt fahren kann. Die Leitplanken üben allerdings nur eine Steuerfunktion aus, da die eigentliche Führung des Fahrzeuges über dessen eigene Lenkeinrichtung erfolgt. Die Kräfte, welche die Leitplanken quer zur Fahrtrichtung aufnehmen müssen, übersteigen nicht wesentlich jene Auslösekraft, die beim Anlaufen einer Steuerrolle gegen eine Leitplanke erreicht werden muß um einen korrigierenden Lenkeinschlag zu bewirken.

Obwohl die eben beschriebene Fahrzeug-Spurführung wegen ihrer Einfachheit sehr zuverlässig ist, weist sie doch eine Reihe von Nachteilen auf:

Es sind längs der gesamten Fahrstrecke des Fahrzeuges zwei Leitplanken erforderlich.

der Radius einer Kurve ist durch die Länge des Fahrzeuges bzw. durch den Abstand zwischen seinen gelenkten und ungelenkten Rädern begrenzt, da die ungelenkten Räder nicht seitlich gegen die Leitplanke anlaufen dürfen,

an Verzweigungsstellen sind aufwendige Weichen erforderlich, welche- wie Eisenbahnweichen- eine bewegliche Weichenzunge benötigen, die entsprechend der beabsichtigten Fahrtrichtung eingestellt werden muß.

Die Weichen bilden das größte Problem bei Fahrspursystemen, mit Spurführung, da der zur Weiche erforderliche, gegebenenfalls vom Fahrzeuginneren aus fernlenkbare Antriebsteuer ist, häufigen Störungen unterliegt, insbesondere im Winter bei Vereisung, und daher stets überwacht, betreut und gewartet werden muß.

Zur Lösung dieses Problems wurde gemäß der FR—A 24 24 169 bereits ein spurführbares Radfahrzeug, insbesondere Omnibus, mit Merkmalen der im Oberbegriff des Anspruches 1 angegebenen Art vorgeschlagen. Dabei weist dieses bekannte Radfahrzeug wenigstens zwei durch ein Lenkgestänge verbundene lenkbare Räder und mindestens eine je Fahrzeugseite diese nahe einem gelenkten Rad seitlich überragende Steuerrolle auf. Letztere ist an einem mit dem Lenkgestänge verbundenen Steuerarm gelagert. Außerdem ist eine Regeleinrichtung vorgesehen, die auf einen Stellantrieb einwirkt, mit dem die Steuerrollen in Wirkposition mit der jeweils zugehörigen Leitplanke bringbar sind. Der Stellantrieb ist in seiner Wirkrichtung umschaltbar und nur bedarfsweise, wenn die Spurführung es erfordert, zuschaltbar. Der Stellantrieb ist in seiner Wirkung derart gerichtet und bemessen, daß nach seiner Inbetriebnahme ein Lenkeinschlag der lenkbaren Räder in Richtung Leitplanke herbeiführbar und die jeweilige Steuerrolle mit einer die Auslösekraft nur wenig übersteigenden Kraft auswärts an diese Leitplanke anstellbar ist und an letzterer, deren Richtung bzw. etwaigen Krümmungen folgend, in eingestellter Position bleibt bzw. in solche Positionen nachgestellt wird, daß die lenkbaren Räder innerhalb der Spur den erforderlichen Winkel in Bezug auf die führende Leitplanke einnehmen. Bei diesem bekannten Radfahrzeug ist der Stellantrieb durch einen unmittelbar oder mittelbar über eine Schlupfkupplung und ein Getrieb auf die Lenksäule des Fahrzeugs einwirkenden elektrischen Stellmotor realisiert. Zur Einsteuerung einer bestimmten Anpreßkraft der jeweiligen Steuerrolle kann in deren Halterung eine Kraftmeßvorrichtung eingebaut sein. Die Bemessung der Anpreßkraft erfolgt über einen elektrischen Regler.

Dieser bekannte Stellantrieb erweist sich aus verschiedenen Gründen als nachteilig. die Lenksäule hat im Vergleich mit den Abmessungen der weiteren für die Lenkung des Fahrzeugs erforderlichen Organen einen vergleichsweise geringen Durchmesser. Dies bedeutet, daß, um von der Lenksäule alle von den besagten Organen einer Betätigung entgegenwirkenden Kräfte überwinden zu können, ein entsprechend leistungsstarker Elektromotor erforderlich ist. Dieser Leistungsbedarf des elektrischen Stellmotors wird auch durch das Vorsehen eines zwischen ihm und der Lenksäule eingeschalteten Getriebes nicht wesentlich verringert. Darüberhinaus setzt das Vorsehen dieses elektrischen Stellmotors an der Lenksäule eine entsprechende Nachrüstmöglichkeit für die Bewegungsübertragenden Elemente oder ein solches Vorsehen der besagten Mittel unmittelbar an der Lenksäule voraus. Des weiteren setzt das Vorsehen des elektrischen Stellmotors und ggf. auch des Getriebes sowie der Schlupfkupplung nicht nur einen entsprechenden Raum, sondern auch entsprechende Vorkehrungen für deren Befestigung voraus. Darüberhinaus belastet der elektrische Stellmotor aufgrund seiner erforderlichen großen Leistungsaufnahme ganz wesentlich die fahrzeugeigene Batterie was entweder deren Lebensdauer beschneidet oder nur durch ein entsprechende leistungsstärkere Bemessung der Batterie ausgeglichen werden kann.

Aus der DE—AS 21 27 088 ist jedoch auch schon ein Stellantrieb der gattungsgemäßen Art bekannt; dabei kommen zwei Hydraulikanordnungen zur Anwendung, von denen jede aus einem Kolben und einem doppeltwirkenden Druckzylinder besteht. Jeder Kolben trennt in seinem Kolben zei Druckräume, über die er in Gegenrichtung druckbeaufschlagbar ist. Über jeweils endseitige Anschlüsse sind jeweils paarweise der innere Druckraum des einem Druckzylinders und der äußere Druckraum des anderen Druckzylinders an einem Anschluß eines Mehrwege-Umschaltventils angeschlossen. Dieses ist speiseseitig mit einer Druckmittelbereitstellungseinrichtung und entlastungsseitig mit einem Öl-Reservoir verbunden.

Der Nachteil dieser Lösung ist, daß sie verhältnismäßig viel Raum im Fahrzeug beansprucht und überdies relativ teuer ist. Außerdem ist, solange der Stellantrieb in Aktion gehalten werden muß, immer eine Leistungsabgabe von der Druckmittelbereitstellungseinrichtung erforderlich, was die Einsatzmöglichkeit der diesbezüglichen Aggregate (Hydraulikpumpe und Akkumulator) für Ihre eigentlichen Zwecke in bestimmten Fällen zu stark einschränkt.

Es ist daher ausgehend von diesem Stand der Technik Aufgabe der Erfindung, den Stellantrieb und die diesem für einen befriedigenden Betrieb desselben zugeordneten Mittel so auszubilden, daß diese Organe wenig Platz im Fahrzeug beanspruchen und durch vergleichsweise einfache Mittel realisierbar sind, daß ferner für die Verstellung der lenkbaren Organe geringe Stellkräfte notwendig und außerdem für die Betätigung des Stellantriebs am Fahrzeug vorhandene Kraftquellen ohne nachteilige Auswirkungen auf die Belieferung anderer Abnehmer ausnutzbar sind.

Diese Aufgabe ist bei einem Spurführbaren Radfahrzeug der gattungsgemäßen Art erfindungsgemäß durch Vorsehen, Ausgestaltung und Funktion der im Kennzeichen des Anspruchs 1 angegebenen Mittel gelöst.

Durch einen derartigen Stellantrieb und die diesem zugeordneten Einrichtungen sind die aufgabengemäßen Forderungen in jeder Beziehung erfüllbar. Es wird wenig Platz am Fahrzeug beansprucht und infolge der Anlenkung des Kolbens über dessen Kolbenstange am Lenkgestänge sind auch nur vergleichsweise kleine Stellkräfte für die Verstellung der lenkbaren Räder erforderlich. Als Druckmittelquelle können die fahrzeuginternen Druckluft- oder Hydrauliksysteme ohne nachteilige Auswirkungen auf die Belieferung der des weiteren von diesen versorgten Einrichtungen des Fahrzeuges angezapft werden.

Nach Inbetriebnahme führt der Stellantrieb einen Lenkeinschlag der lenkbaren Räder in Richtung spurführender Leitplanke herbei. Dieser Lenkeinschlag veranlaßt die entsprechende Steuerrolle gegen die zugeordnete Leitplanke anzulaufen. Die Krakftentfaltung des erfindungsgemäßen Stellantriebes ist derart dosiert, daß die Wirkung des Stellantriebs von der steuernden Zusammenwirkung zwischen Leitplanke und Steuerrolle überwunden und letztere mit nur wenig mehr als der zum Erreichen eines Steuervorganges erforderlichen Auslösekraft gegen die Leitplanke angedrückt wird. Wäre die Kraftwirkung des Stellantriebes kleiner, dann wäre der ständige steuernde Kontakt zwischen Steuerrolle und Leitplanke nich sichergestellt. Wäre die Kraftwirkung des Stellantriebes wesentlich höher, dann würde sie unmittelbar als Querkraft auf Positon und Fahrtrichtung des Fahrzeugs Einfluß nehmen. Erst durch die dosierte Kraftwirkung des Stellantriebes ist es mithin möglich, daß sich das Fahrzeug bei Verwendung nur einer einzigen Steuerrolle und dementsprechend auch nur einer einzigen führenden Leitplanke längs derselben gewissermaßen entlang tasten kann, wobei bei nennenswertem Überschreiten der Auslösekraft zwischen Steuerrolle und Leitplanke das Fahrzeug von dieser weggelenkt und bei Unterschreiten dieser Auslösekraft das Fahrzeug wieder gegen die Leitplanke hingelenkt wird. Dadurch, daß der erfindungsgemäße Stellantrieb abvschaltbar ist, wird ein Betrieb des Fahrzeuges mit der üblichen Fahrzeug-Eigensteuerung ermöglicht. Durch die doppeltwirkende Ausbildung des erfindungsgemäßen Stellantriebes vereinfacht sich die Gesamtanordnung als solches und erspart das Vorsehen weiterer Bauteile Durch diese doppeltwirkende Ausgestaltung des Stellantriebes wird es dem Erbauer einer Bahntrasse zunächst freigestellt, an welcher Seite derselben er die die Spurführung veranlassende Leitplanke vorsieht. Es ist lediglich darauf zu achten, daß die spurführende Leitplanke auf der einen Fahrzeugseite bereits um eine gewisse Strecke vor jeder Leitplanke endet, die der anderen Fahrzeugseite zugeordnet ist, un in diesem Übergangsbereich das von Hand oder automatisch herbeigeführte Umsteuern des Stellantriebes vornehmen zu können. Es ist also die Verwendung einer sogenannten passiven Weiche möglich, die keinerlei bewegte Teile aufweist. Sind zwei Leitplanken beiderseits der Fahrspur vorgesehen und divergieren diese an einer Verzweigungsstelle, dann folgt das Fahrzeug entsprechend der Wirkungsrichtung des Stellantriebes und somit des von ihm initiierten Lenkeinschlages der einen oder anderen Leitplanke. Durch entsprechendes Umschalten des Stellantriebes kann somit an einer solchen Verzweigungsstelle die Fahrtrichtung des Fahrzeuges zuverlässig durch entsprechende Einstellung der lenkbaren Räder bestimmt werden. In Bereichen der Fahrspur, die beiderseits mit einer Leitplanke vesehen sind, ist es somit nicht erforderlich, den Stellantrieb in Betrieb zu nehmen. Der Stellantrieb wird lediglich vor dem Einfahren in eine Verzweigungsstelle eingeschaltet und sorgt dann dafür, daß entsprechend der gewählten Wirkungsrichtung das Fahrzeug in den gewünschten Zweig der Weiche einläuft. Befindet sich das Fahrzeug dann wieder in einem Trassenbereich, der beiderseits mit einer Leitplanke versehen ist, dann kann auf den weiteren Betrieb des Stellantriebes verzichtet und dieser dann abgeschaltet werden.

Dadurch, daß dem erfindungsgemäßen Stellantrieb gemäß einer weiteren Ausgestaltung der Erfindung eine Einrichtung zum Regulieren der auf die Steuerrollen auszuübenden Kraftwirkung zugeordnet ist, wird sichergestellt, daß die erforderliche Auslösekraft einerseits stets, andererseits nie zu stark überschritten wird. Die besagte Einrichtung ist bevorzugt etwa in Abhängigkeit von der Fahrgeschwindigkeit, der Achslast der Lenkachse oder anderen Faktoren einstellbar, um die vom Stellantrieb ausgeübte Kraftwirkung an die jeweils tatsächlich erforderliche Auslösekraft anzupassen, welche mit dem Widerstand veränderlich ist, den die Lenkung den Lenkbewegungen entgegensetzt. Dieser Widerstand hängt seinerseits ab von einer Reihe von Parametern, wie etwa dem gewählten Reifenprofil, dem Reifendruck, der Fahrgeschwindigkeit und dgl. Durch entsprechende Steuerung des Stellantriebes kann die Lenkung des Fahrzeugs somit an die Genannten Parameter angepaßt werden und gestattet daher bei Geradeausfahrten, wenn nur eine Leitplanke als Spurführung verwendet ist, höhere Fahrgeschwindigkeiten.

Gemäß einer Ausgestaltung der Erfindung ist mit Abstand von der Steuerrolle an der jeweils gleichen Seite des Fahrzeuges ein Berührungsmeßfühler angeordnet, der ebenfalls mit der spurführenden Leitplanke in Berührung treten kann und daher etwa die gleiche Bauhöhe über dem Boden wie die Steuerrollen aufweist. Dieser Berührungsmeßfühler ist vorzugsweise durch eine mit einer Druckmeßdose verbundene Rolle gebildet und im Bereich der ungelenkten Räder des Fahrzeuges angeordnet. Dieser Meßfühler überragt seitlich die Fahrzeugspur, aber um ein geringeres Maß als die jeweilige Steuerrolle, so daß er bei Geradeausfahrt oder bei Fahrt durch weite Kurven nicht mit der spurführenden Leitplanke in Berührung gelangt. Erst bei verhältnismäßig engen Kurven läuft der Berührungsmeßfühler gegen die Leitplanke an und gibt ein Signal ab, welches sein seits den Stellantrieb außer Wirkung setzt. Der Stellantrieb trachtet in diesem Fall dann danach, den die Kurvenfahrt herbeiführenden Lenkeinschlag der gelenkten Räder aufzulösen. Die gelenkten Räder bewegen sich dann infolge ihres Laufverhaltens in ihre Neutrallage zurück, und zwar solange, bis der Berührungsmeßfühler keine Berührung mehr meldet. In diesem Fall wird der Stellantrieb reaktiviert und sorgt dann wieder für einen Lenkeinschlag in die Kurve hinein. Die genannten Vorgänge wiederholen sich solange, bis die Krümmung der Fahrtrasse so stark abgenommen hat, daß der Berührungsmeßfühler nicht mehr mit der Leitplanke in Berührung gelangen kann. Dies erlaubt es, die Spurführungstrasse mit verhältnismäßig engen Kurven auszustatten. Durch die Ausgestaltung des Berührungsmeßfühlers durch eine mit einer Druckmeßdose vebundene Rolle kann die Auslöseschwelle dieser Druckmeßdose so gewählt werden, daß bei deringem Anlaufen der zugeordneten Rolle gegen die Leitplanke, was bei Geradeauslauf-Schwankungen durchaus der Fall sein kann, noch kein Signal abgegeben wird, das den Stellantrieb unterbrechen könnte.

Dadurch, daß der Stellantrieb erfindungsgemäß durch einen mit einer Kolbenstange am Lenkgestänge angelenkten, in einem doppeltwirkenden, pneumatisch bzw. hydraulisch Beaufschlagbaren Druckzylinder arbeitenden Kolben gebildet ist, ist ein einfaches Aggregat verwendet, das eine große Zuverlässigkeit aufweist, in seiner Kraftwirkung einfach einstellbar ist und auch ein gewisses Dämpfungsverhalten aufweist, das erforderlich ist, um zu kurzfristig aufeinanderfolgende, durch ein Flattern der Lenkung hervorgerufene Steuervorgänge zu vermeiden. Der erfindungsgemäße Druckzylinder eremöglicht eine einfache Ansteuerung seiner beiden Druckräume mit entsprechendem Druckmittel und ist gegenüber Leckverlusten unempfindlich. Als Druckmittel kann beispielsweise Druckluft oder Hydrauliköl verwendet werden, die bzw. das im Fahrzeug ohnehin zum Betrieb der Bremsen, Türen oder dgl. benutzt und in entsprechenden Systemen bereitgestellt ist.

Gemäß einer weiteren Ausgestaltung der Erfindung ist am Fahrzeug ein Signalempfänger angebracht, der mit dem Stellantrieb zu dessen Ansteuerung verbunden ist. Dieser Signalepfänger wirkt mit einem Signalgeber zusammen, der der Trasse zugeordnet ist und ein für den weiteren Verlauf derselben maßgebendes Signal abgibt. Dieses Signal kann entweder stets unverändert bleiben, wie etwa vor oder nach einer engen Kurve, wenn der Stellantrieb ein- bzw. ausgeschaltet werden soll. Das Signal kann aber auch veränderbar sein, beispielsweise an einer Weiche, wobei dieses Signal dann durch ein Stellwerk vorgegeben wird um den Stellantrieb zur Lenkung des Fahrzeugs in der jeweils gewünschten Richtung entsprechend ansteuern zu können.

Statt eines Signalempfängers oder zusätzlich zu diesem kann am Fahrzeug auch ein Richtungsschalter vorgesehen sein, der mit dem Stellantrieb verbunden und dem eine Rückmeldeeinrichtung zugeordnet ist. Dieser Richtungsschalter dient zusammen mit der Rückmeldeeinrichtung dem Fahrer des Fahrzeuges dazu, vor einer Weiche die Richtung zu wählen und sich zu vergewissern, daß der Stellantrieb auch in entsprechender Weise angesteuert ist. Vorzugsweise ist der besagte Richtungsschalter durch ein 3/4-Wege-Ventil gebildet, an dem die beiden jeweils zu einem Druckraum im Druckzylinder führenden Druckmittelzuleitungen angeschlossen sind. Außerdem ist dieses 3/4-Wege-Ventil mit einer Druckmittelversorgung und einem an diese angeschlossenen Ausgleichsbehälter verbunden, der für eine Konstanthaltung des Druckes des besagten Leitungen zuführbaren Druckmittels sorgt. Das 3/4-Wege-Ventil kann drei Schaltstellungen einnehmen, nämlich eine Neutralstellung, in der die Druckräume des Druckzylinders nicht angesteuert sind, und zwei Endstellungen, in denen wechselweise der eine Druckraum des Druckzylinders druckbelastet und der andere Druckraum druckentlastet ist. Diese beiden Endstellungen des 3/4-Wege-Ventiles werden durch jeweils eine, weiter vorn bereits erwähnte Rückmeldeeinrichtung überwacht.

In weiterer bevorzugter Ausführungsform der Erfindung ist zwischen den beiden am Druckzylinder angeschlossenen Druckmittelleitungen, jeweils verbunden mit einer derselben, ein über einen Elektromagneten schaltbares Bypassventil vorgesehen, wobei der Elektromagnet ein Signal zum Schließen des Bypassventiles dann erhält, wenn vom weiter vorn bereits erwähnten Berührungsmeßfühler eine Berührung der Leitplanke festgestellt wird. Durch ein Schließen des Bypassventiles wird das Druckgefälle am Kolben des Druckzylinders aufgehoben und dieser außer Betrieb gesetzt, mit der Folge, daß die lenkbaren Räder des Fahrzeuges wieder in ihre Neautrallage zurückbewegt werden. Dieser Vorgang ist weiter vorn bereits eingehend erläutert.

Die Einrichtung zum Regulieren der auf die Steuerrolle auszuübenden Kraftwirkung besteht vorzugsweise aus einem Regler, der über Druckmittelleitungen mit den beiden Druckräumen des Druckzylinders jeweils endseitig verbunden ist und zwei, je einem Druckraum zugeordnete Druckschalter sowie wenigstens ein, vorzugsweise zwei Druckbegrenzungsventile aufweist. Dieser Regler ist mithin aus einfachen Bauteilen aufgebaut und stellt ein sicheres Einstellen und Begrenzen der vom Stellantrieb aufgebrachten Stellkraft sicher.

Nachstehend ist die Erfindung anhand der beigefügten,schematischen Zeichnung beispielhaft noch näher beschrieben.

In der Zeichnung zeigt:
Figur 1 die Lenkung eines herkömmlichen Radfahrzeuges,
Figur 2a) die zum Radfahrzeug der Fig. 1 zugehörige herkömmliche Weiche,
Figur 2b) eine vereinfachte, nur vom erfindungsgemäßen Radfahrzeug befahrbare Weiche, und
Figur 3 die schematische Darstellung der Lenkung der erfindungsgemäßen Radfahrzeuge mit zugehörigen Antriebs- und Stelleinrichtungen.

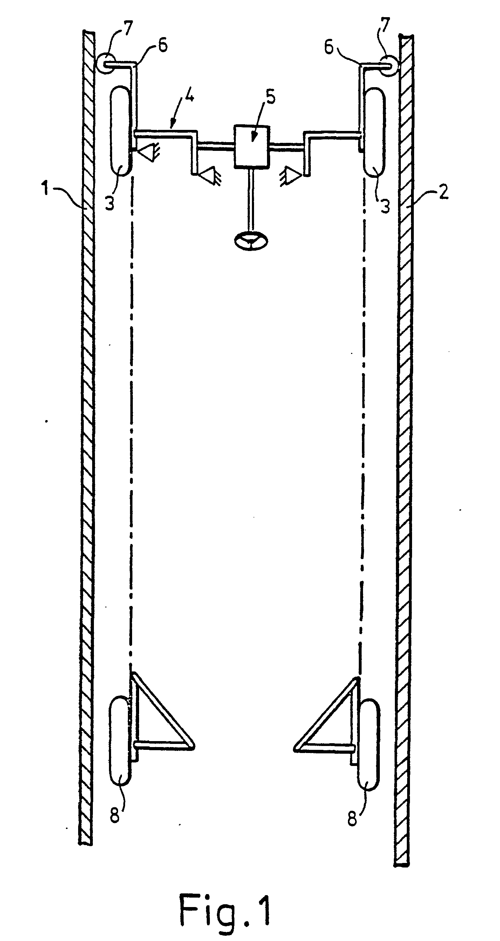

In Fig. 1 ist die Lenkung eines herkömmlichen Radfahrzeuges schematisch dargestellt, welches sich auf einer Trasse bewegt, die von zwei Leitplanken 1 und 2 flankiert ist.

Das Radfahrzeug weist zwei lenkbare vorderräder 3 auf, die über ein Lenkgestänge 4 miteinander verbunden sind, das von einer Lenkung 5 ansteuerbar ist.

Am Lenkgestänge 4 ist starr im Bereich eines jeden Lenkrades 3 jeweils ein Arm 6 angebracht, welcher dieses nach vorne sowie seitlich nach außen überragt und an seinen freien Enden jeweils eine Steuerrolle 7 trägt. Diese Steuerrolle 7 befindet sich in gleicher Höhe mit den Leitplanken 1 und 2 und überragt seitlich jeweils die von den Außenflanken der Lenkräder 3 oder anderen Fahrzeugteilen bestimmte Fahrzeugspur.

Am hinteren Ende des Fahrzeuges sind ungelenkte Hinterräder 8 angebracht.

In Fig. 1 ist das Fahrzeug gezeigt, wie es mit seiner rechten Steuerrolle 7 gerade leicht gegen die danebenliegende Leitplanke 2 anläuft. Wird bei diesem Anlaufen eine Auslösekraft überschritten, dann wird die Steuerrolle 7 und damit der zugehörige Arm 6 nach links gedrückt, wobei das gesamte Lenkgestänge derart verstellt wird, daß die Steuerräder 3 eine Laufrichtung annehmen, in welcher sich das Fahrzeug parallel zur Leitplanke 2 oder geringfügig von dieser weg bewegt.

Durch die enge Dimensionierung des Spiels zwischen Lufrollen 7 und Lietplanken 1 kann ein völlig zufriedenstellender gerader Lauf erreicht werden.

Es ist ferner erkennbar, daß bei Kurvenfahrt der Kurvenradius so groß sein muß, daß die Hinterräder 8 nicht seitlich gegen eine der Leitplanken 1 oder 2 anlaufen.

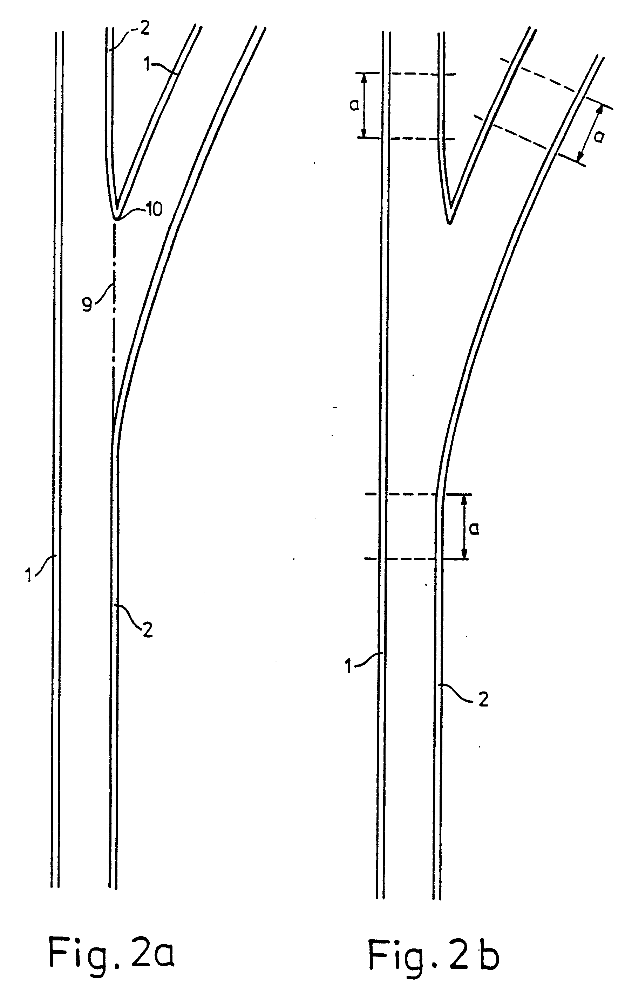

In Fig. 2a ist eine zum Fahrzeug der Fig. 1 passende Weiche gezeichnet. Diese Weiche ist von einer Trassengabelung gebildet, in welcher alle Trassenzweige jeweils beiderseits von den Leitplanken 1 und 2 begrenzt sind. Inmitten der Gabelung befindet sich eine um ein Gelenk 10 schwenkbare Weichenzunge 9, welche sich entsprechend der gewünschten Fahrtrichtung entweder gegen die Leitplanke 1 oder die Leitplanke 2 anlegt. Diese Weichenzunge 9 ist nur als strichpunktierte Linie schematisch gezeigt und muß in der Praxis entsprechende Konturen aufweisen, um an jeder ihrer Flanken eine zuverlässige Führung für die Steuerrolle 7 des Fahrzeuges zu bilden.

Ferner benötigt die Weichenzunge 9 einen eigenen Stellantrieb, der in der Zeichnung nicht gezeigt ist.

In Fig. 2b ist eine Weiche gezeigt, bei welcher die Trassenführung und die Anordnung der Leitplanken 1 und 2 im wesentlichen der Ausführungsform der Fig. 2a entsprechen. Die Weiche der fig. 2b enthält allerdings keine Weichenzunge oder sonstige bewegte oder ansteuerbare Teile.

Es ist lediglich der Einlauf eines jeden Trassenzweiges in die Weiche eine bestimmte Strecke mit a bezeichnet, welche als Übergangsstrecke dient, innerhalb welcher ein fahrzeugeigener Stellantrieb betätigt werden kann.

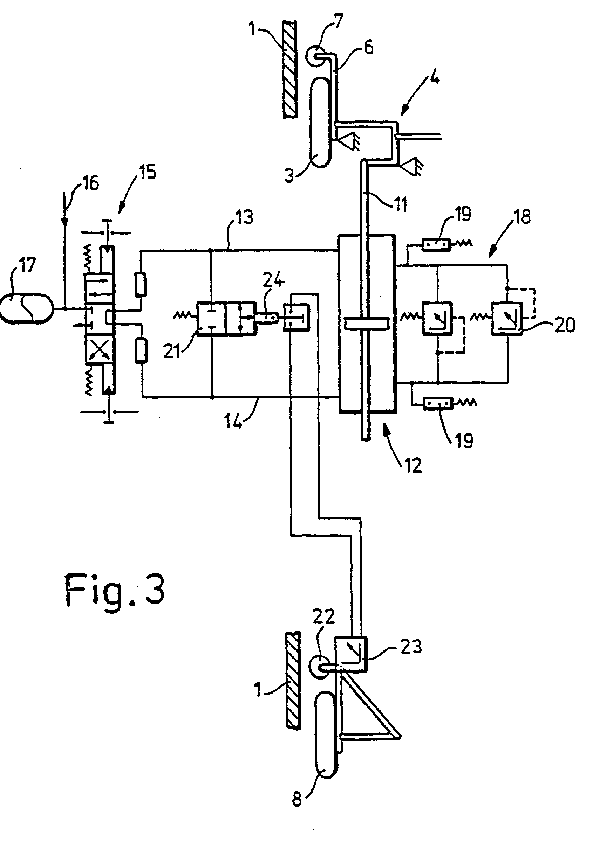

Fig. 3 zeigt schematisch die Lenkung eines Fahrzeuges, welches in der Lage ist, die Weiche der Fig. 2b zu durchfahren.

Die Lenkung dieses Fahrzeuges weist zunächst übereinstimmend mit dem bekannten Fahrzeug der Fig. 1 die Teile 3 mit 5 auf.

Zusätzlich ist am Lenkgestänge 4 über eine Kolbenstange 11 ein doppeltwirkender Zylinder 12 angebracht, dessen beide Enden wechselweise über eine Druckluftleitung 13 oder 14 beaufschlagt werden könnte, um den im Zylinder 12 befindlichen Kolben zusammen mit der Kolbenstange 11 nach vorne oder hinten zu bewegen, je nach der gewünschten Wirkungsrichtung.

Die beiden Leitungen 13 und 14 münden in ein 3-/4-Wege-Ventil, das mit einer Druckluftversorgung 16 und einem an diese angeschlossenen Ausgleichsbehälter 17 verbunden ist, der dafür sorgt, daß der Luftdruck stets etwa gleich bleibt, der über die Leitungen 13 und 14 den Zylinder 12 zugeführt werden soll.

Das 3-/4-Wege-Ventil 15 weist eine Neutralstellung auf, die in der Figur gezeigt ist und in welcher der Zylinder 12 nicht angesteuert ist, sowie zwei Endstellungen, welchen jeweils eine schematisch angedeutete Rückmeldeeinrichtung zugeordnet ist und in welchen ds vordere bzw. hintere Ende des Zylinders 12 mit Druckluft beaufschlagt bzw. entlüftet wird.

Die beiden Enden des Zylinders 12 sind ferner mit einem Regler 18 verbunden, welcher zwei Druckschalter 19 sowie mindestens ein Druckbegrenzungsventil 20 aufweist. Der Regler 18 begrenzt den auf den Kolben der Kolbenstange 11 einwirkenden Differenzdruck auf ein solches Maß, daß die Steuerrolle 7 gegen die zugehörige Leitplanke 1 oder 2 gerade mit einer solchen Kraft angedrückt wird, welche die zum Herbeiführen einer Steuerbewegung des Lenkgestänges 4 erforderliche Auslösekraft nur um ein weniges über steigt.

Zum kurzzeitigen und möglichst trägheitslosen Abschalten des Zylinders 12 ist zwischen dessen beiden Zuleitungen 13 und 14 ein Bypaßventil 21 angebracht, welches über einen Elektromagneten 24 ein- bzw. ausgeschaltet werden kann.

Macht die Fahrsituation etwa infolge einer Betriebsstörung es erforderlich, daß der Fahrer in den Lenkvorgang eingreift, dann wird über dieses Bypaßventil 21 zunächst der vom Zylinder 12 gebildete Stellantrieb ausgeschaltet.

Unmittelbar vor dem Hinterred 8 ist auf gleicher Höhe wie die Steuerrolle 7 eine Tastrolle 22 angebracht, welche mit einer Druckmeßdose 23 verbunden ist, welche bei Belastung der Tastrollen 22 ein Signal abgibt. Dieses Signal wird dem Elektromagneten 24 zum Ansteuern des Bypaßventils 21 zugeführt und schließt dieses, so daß dann, wenn die Tastrolle 22 seitlich gegen die Leitplanke 1 anläuft, durch Schließen des Bypaßventiles 21 das Druckgefälle über den Kolben des Zylinders 12 aufgehoben wird und dieser somit außer Betrieb gesetzt wird. In diesem Fall trachtet das Lenkgetriebe aufgrund des Geradelaufverhaltens der Lenkung danach, die beiden Vorderräder 3 geradezustellen, wobei sich der Eingriff zwischen Steuerrolle 7 und Leitplanke 1 löst. Wenn nun die Berührung zwischen der Rolle 22 und Leitplanke 1 aufgehoben wird, dann setzt das Signal der Druckmeßdose 23 aus, der Elektromagnet 24 öffnet das Bypaßventil 21 und der Stellzylinder 12 wird wieder derart mit Druck beaufschlagt, daß das Lenkrad 3 eingeschlagen wird, bis die Steuerrolle 7 wieder gegen die Leitplanke 1 anläuft.

Die Vorgänge wiederholen sich so lange, bis ein gerader oder hinlänglich wenig gekrümmter Trassenabschnitt erreicht ist, welcher die kontinuierliche Fahrt des Fahrzeuges gestattet, ohne daß die Rolle 22 gegen die Leitplanke 1 anläuft.

Fahrzeuge mit mehreren Lenkachsen, insbesondere Gelenkfahrzeuge, können auf jeder Fahrzeugseite auch mit mehreren Rollen (7, 22), ausgestattet sein.

**Patentansprüche**

1. Spurführbares Radfahrzeug, insbesondere Omnibus, mit mindestens zwei durch ein Lenkgestänge (4) verbundenen lenkbaren Rädern (3) und mit mindestens einer je Fahrzeugseite diese nahe einem gelenkten Rad seitlich überragenden Steuerrolle (7), die an einem mit dem Lenkgestänge (4) verbundenen Steuerarm (6) gelagert ist, ferner mit einer auf einen Stellantrieb zur Einstellung je einer der Steuerrollen (7) in Wirkposition mit der zugehörigen Leitplanke (1, 2) einwirkenden Regeleinrichtung, welcher Stellantrieb auf das Lenkgestänge einwirkende, druckmittel beaufschlagte Organe aufweist und in seiner Wirkrichtung mittels eines Mehrwegeventils umschaltbar sowie nur bedarfsweise, wenn die Spurführung es erfordert, zuschaltbar ist sowie nach Inbetriebnahme in seiner Wirkung derart gerichtet und bemessen ist, daß ein Lnekeinschlag der Räder in Richtung Leitplanke herbeiführbar und die jeweilige Steuerrolle (7) mit einer die Auslöskraft nur wenig übersteigenden Kraft auswärts an diese Leitplanke (1, 2) anstellbar ist und an letzterer, deren Richtung bzw. etwaigen Krümmung folgend, in eingestellter Position bleibt bzw. in solche Positionen nachgestellt wird, daß die lenkbaren Räder (3) innerhalb der Spur den erforderlichen Winkel in Bezug auf die führende Leitplanke (1, 2) einnehmen, dadurch gekennzeichnet, daß der Stellantrieb nur einen einzigen mit seiner Kolbenstange am Lenkgestänge (4) angelenkten Kolben (11) aufweist, der in einem doppeltwirkenden druckmittelbeaufschlagbaren Druckzylinder (12) arbeitet, dort zwei endseitig jeweils an eine Druckmittelzuleitung (13, 14) angeschlossene Druckräume voneinander trennt und über diese in Gegenrichtung druckbeaufschlagbar ist, und dem eine Einrichtung (18) zum Regulieren der auf die Steuerrollen (7) auszuübenden Kraftwirkung und Einrichtungen zur dosierten Zuführung des Druckmittels zugeordnet sind, und daß mit Abstand zu einer Steuerrolle (7) an der gleichen Seite des Fahrzeugs, bevorzugt nahe einem ungelenkten Rad (8), mindestens ein die Fahrzeugspur seitlich um eine Strecke überragender Berührungsmeßfühler (22, 23) angeordnet ist, der bei Berührung mit der Leitplanke (1, 2) den besagten Stellantrieb außer Wirkung setzt, wobei die besagte Strecke kleiner ist als jene, um welche die betreffende Steuerrolle (7) die Fahrzeugspur überragt.

2. Spurführbares Radfahrzeug nach Anspruch 1, dadurch gekennzeichnet, daß der Berührungsmeßfühler durch eine mit einer Druckmeßdose (23) verbundene Rolle (22) gebildet ist.

3. Spurführbares Radfahrzeug nach Anspruch 1, dadurch gekennzeichnet, daß am Fahrzeug ein Signalempfänger angebracht ist, der mit dem Stellantrieb (12) zu dessen Ansteuerung verbunden ist.

4. Spurführbares Radfahrzeug nach Anspruch 1, dadurch gekennzeichnet, daß der Stellantrieb (12) über einen Richtungsschalter (15) mit Rückmeldeeinrichtung ansteuerbar ist.

5. Spurführbares Radfahrzeug nach Anspruch 4, dadurch gekennzeichnet, daß der Richtungsschalter (15) durch ein 3/4-Wege-Ventil gebildet ist, an dem die beiden zum Druckzylinder der Stelleinrichtung (12) führenden Druckmittelzuleitungen (13, 14), eine Druckmittelbereitstellungseinrichtung (16), ein mit letzterer verbundener Ausgleichsbehälter (17), der für eine Konstanthaltung des den Druckmittelzuleitungen (13, 14) zuführbaren Druckmittels sorgt, und gegebenenfalls eine Entlastungsleitung angeschlossen sind, und daß das 3/4-Wege-Ventil drei Schaltstellungen mit folgenden Funktionen einnehmen kann, nämlich

a) eine Neutralstellung, in der die Druckräume des Druckzylinders (12) nicht angesteuert sind,

b) ein erste Endstellung, in der der erste Druckraum des Druckzylinders (12) über die Druckmittelleitung (13) druckbeaufschlagt, der zweite Druckraum über die Druckmittelleitung (14) entlastet ist, und

c) eine zweite Endstellung, in der der zweite Druckraum des Druckzylinders (12) über die Druckmittelleitung (14) druckbeaufschlagt, der erste Druckraum dagegen über die Druckmittelleitung (13) entlastet ist.

6. Spurführbares Radfahrzeug nach Anspruch 5, dadurch gekennzeichnet, daß jede der beiden Endstellungen des den Richtungsschalter (15) bildenden 3/4-Wege-Ventils durch eine Rückmeldeeinrichtung überwacht ist.

7. Spurführbares Radfahrzeug nach Anspruch 1, dadurch gekennzeichnet, daß zwischen den beiden zum Druckzylinder des Stellantriebs hinführenden Druckmittelleitungen (13, 14) — jeweils verbudnen mit einer derselben — ein über einen Elektromagneten (24) schaltbares Bypassventil (21) vorgesehen ist, wobei der Elektromagnet (24) ein Signal zum Schließen des Bypassventiles (21), durch das das Druckgefälle am Kolben des Druckzylinders (12) aufgehoben und dadurch der Stellantrieb außer Betrieb gesetzt wird, dann erhält, wenn vom Berührungsmeßfühler (22, 23) eine Berührung der Leitplanke festgestellt wird.

8. Spurführbares Radfahrzeug nach Anspruch 1, dadurch gekennzeichnet, daß die Einrichtung zum Regulieren der mittels des Stellantriebs auf die Steuerrolle (7) auszuübenden Kraftwirkung aus einem Regler (18) besteht, der über Druckmittelleitungen mit beiden Druckräumen des Druckzylinders (12) jeweils endseitig verbunden ist und zwei, je einem Druckraum zugeordnete Druckschalter (19) sowie wenigstens ein, vorzugsweise zwei Druckbegrenzungsventile (20) aufweist.

**Revendications**

1. Véhicule à roues susceptible d'être guidé sur piste, notamment autobus, avec au moins deux roues directrices (3) reliées par une tringlerie de direction (4), et avec au moins un galet de commande (7) faisant saillie au-delà de chacun des côtés du véhicule, au voisinage d'une roue directrice, et qui est monté sur un bras de commande (6) relié à la tringlerie de direction (4), et avec en outre un dispositif de réglage agissant sur un entraînement de mise en place pour mettre chacun des galets de commande (7) en position opérationnelle avec la glissière de guidage correspondante (1, 2) cet entraînement de mise en place agissant sur la timonerie de direction présentant des organes soumis à des fluides sous pression et étant susceptible d'être inversé dans son sens d'action par l'intermédiaire d'un valve à plusieurs voies et étant également susceptible de n'être mis en circuit qu'en cas de besoin, lorsque le guidage sur piste l'exige, comme après sa mise en fonctionnement, son action est dirigée et dosée de façon qu'on braquage des roues en direction du rail de guidage puisse être provoqué et que le galet de commande (7) concerné puisse être déplacé vers l'extérieur contre cette glissière de guidage (1, 2) avec un effort ne dépassant que peu l'effort de déclenchement, et reste contre la glissière, en suivant la direction et les courbures éventuelles de celle-ci, dans la position ainsi réglée, ou bien soit ajusté dans des positions telles que les roues directrices (3) prennent à l'intérieur de la voie, l'angle nécessaire par rapport à la glissière de guidage (1, 2) à suivre, véhicule caractérisé en ce qu l'entraînement de mise en place ne présente qu'un seul piston (11) articulé par sa tige de piston sur la timonerie de direction (4) et qui, opérant dans un cylindre de pression à double effet (12), susceptible d'être alimenté par fluides sous pression, y sépare l'une de l'autre des chambres de pression raccordées respectivement du côté terminal à une conduite d'alimentation de fluide sous pression (13, 14) par l'intermédiaire desquelles le piston peut être sollicité par la pression dans des sens opposés et doté d'un régulateur (18), ayant pour but de réguler la force agissant sur les galets de commande (7) et de dispositifs pour l'alimentation dosée en fluide sous pression et d'au moins un détecteur de contact (22, 23), dépassant latéralement d'une certaine cote la voie du véhicule, est disposé à une certaine cote du galet de commande (7), du même côté du véhicule et, de préférence au voisinage d'une roue non directrice (8), ce détecteur lorsqu'il entre en contact avec le rail de guidage (1, 2), mettant hors d'action l'entraînement de mise en place et la cote de dépassement étant inférieure à celle dont le galet de commande (7) dépasse la voie du véhicule.

2. Véhicule à roues susceptible d'être guidé sur piste selon la revendication 1, caractérisé en ce que le détecteur de contact est constitué par un galet (22) relié à une capsule manométrique (23).

3. Véhicule à roues susceptible d'être guidé sur piste selon la revendication 1, caractérisé en ce que le véhicule est placé un récepteur de signaux, qui est relié à l'entraînement de mise en place (12) pour permettre de commander celui-ci.

4. Véhicule à roues susceptible d'être guidé sur piste selon la revendication 1, caractérisé en ce que l'entraînement de mise en place (12) est susceptible d'être commandé par un dispositif répétiteur, par l'intermédiaire d'un commutateur de direction (15).

5. Véhicule à roues susceptible d'être guidé sur piste selon la revendication 4, caractérisé en ce que le commutateur de direction (15) est constitué par une valve à 3/4 voies à laquelle sont raccordées les deux conduites d'alimentation de fluide sous pression (13, 14) menant au cylindre de pression de l'entraînement de mise en place (12), une alimentation (16) en fluide sous pression, un réservoir de compensation (17) relié à cette alimentation et qui assure le maintien constant de la pression alimentant les conduites de fluide sous pression (13, 14), et, le cas échéant, une conduite d'équilibrage et en ce que la valve à 3/4 voies peut prendre trois positions de commutation correspondant aux fonctions suivantes:

a) une position neutre dans laquelle les chambres de pression du cylindre de pression (12) ne sont pas commandées,

b) une première position terminale, dans laquelle la première chambre de pression du cylindre de pression (12) est alimentée en pression par l'intermédiaire de la conduite de fluide sous pression (13), la seconde chambre de pression étant soulagée en pression par l'intermédiaire de la conduite de fluide sous pression (14), et

c) une seconde position terminale, dans laquelle la seconde chambre de pression du cylindre de pression (12) est alimentée en pression par l'intermédiaire de la conduite de fluide sous pression (14), la première chambre de pression étant, par contre, soulagée en pression par l'intermédiaire de la conduite de fluide sous pression (13).

6. Véhicule à roues susceptible d'être guidé sur piste selon la revendication 5, caractérisé en ce que chacune des deux des deux positions terminales de la valve à 3/4 voies constituant le commutateur de direction (15) est surveillée par un dispositif répétiteur.

7. Véhicule à roues susceptible d'être guidé sur piste selon la revendication 1, caractérisé en ce qu'il est prévu entre les deux conduites de fluide sous pression (13, 14) menant au cylindre de pression de l'entraînement de mise en place une valve de dérivation (21) commutable par un électroaimant (24), et reliée respectivement à l'une de ces conduites, l'electroaimant (24) recevant alors un signal pour fermer la valve de dérivation (21), grâce auquel la chute de pression sur le piston du cylindre (12) est supprimée et l'entraînement de mise en place est mis hors d'action, lorsqu'un contact avec la glissière de guidage est détecté par le détecteur de contact (22, 23).

8. Véhicule à roues susceptible d'être guidé sur piste selon la revendication 1, caractérisé en ce que le dispositif pour la régulation de l'effort à exercer sur le galet de commande (7) par l'intermédiaire de l'entraînement de mise en place est constitué par un régulateur (18), qui est relié, respectivement du côté terminal, par l'intermédiaire de conduites de fluide sous pression, aux deux chambres de pression du cylindre de pression (12), et par deux manocontacteurs (19) dont chacun est associé à une chambre de pression, ce dispositif comportant en outre, au moins une valve (20) de limitation de pression, et, de préférence, deux.

**Claims**

1. A track-guidable vehicle, more particularly an omnibus, having at least two steerable wheels (3) interconnected by steering linkage (4) and having disposed on each side of the vehicle at least one guide roller (7) which projects laterally beyond the side near a steered wheel and is mounted on a control arm (6) connected to the steering linkage (4), the vehicle also having a control facility which acts on a final control drive to adjust one each of the rollers (7) into operative engagement with the associated guide board or the like (1, 2), the final control drive having pressurised elements which act on the steering linkage and being reversible in its operative direction by means of a multiple-way valve, adapted to be brought into operation only as required, when called for by the track guidance and being so directed and dimensioned in its effect after being put into operation that a steering deflection of the wheels towards the board (1, 2) can be produced and the particular roller (7) concerned can be moved outwards into engagement with such board with a force only slightly exceeding the triggering force and remains in engagement with such board, following the direction and any bends thereof, or being subsequently adjusted into positions such that the steerable wheels (3) take up the necessary angle within the track relative to the guide board (1, 2), characterised in that the final control drive is embodied by only one piston (11) which is pivotally connected by way of its piston rod to the steering linkage (4) and which operates in a double-acting pressurisable cylinder (12), where it separates at the end two pressure chambers, each of which is connected to a pressure medium pipe (13, 14) and can be pressurised via these in the opposing direction, said piston having a facility (18) for regulating the force to be exerted on the control rollers (7) and facilities for metering the supply of pressure medium, and in that at least one constant detector (22, 23), which projects laterally some distance beyond the vehicle track is disposed at a distance from the roller (7) on the same side of the vehicle, preferably near an unsteered wheel (8), and upon contacting the guide board (1, 2) renders the final control drive inoperative, the distance by which the detector (22, 23) laterally projects being less than the distance by which the relevant roller (7) projects beyond the vehicle track.

2. A track-guidable wheeled vehicle according to Claim 1, characterised in that the contact detector is embodied by a roller (22) connected to a pressure cell (23).

3. A track-guidable wheeled vehicle according to Claim 1, characterised in that the vehicle bears a signal receiver connected with the final control drive (12) to actuate the same.

4. A track-guidable wheeled vehicle according to Claim 1, characterised in that the final control drive (12) is actuatable by way of a directional switch (15) having a reporting facility.

5. A track-guidable wheeled vehicle according to Claim 4, characterised in that the the directional switch (15) is embodied by a 3/4-way valve to which are attached the two pressure medium pipes (13, 14), a pressure medium supply facility (16), a reservoir (17) connected to this, which ensures a constant supply of the pressure medium to be supplied to the pressure medium pipes (13, 14) and if necessary a relief line, and in that the 3/4-way valve can adopt three switch positions with the following functions, namely:

a) A neutral position, in which there is no actuation of the pressure chambers of the pressure cylinders (12)

b) a first end position, in which the first pressure chamber of the cylinder (12) is pressurised by way of the pressure medium line (13) and the second pressure chamber is depressurised by way of the pressure medium line (14) and

c) a second end position in which the second pressure chamber of the cylinder (12) is pressurised by way of the pressure medium line (14) and the first pressure chamber is depressurised by way of the pressure medium line (13).

6. A track-guidable wheeled vehicle according to Claim 5, characterised in that each of the two end positions of the 3/4-way valve which embodies the directional switch is monitored by a reporting facility.

7. A track-guidable wheeled vehicle according to Claim 1, characterised in that a bypass valve (21) adapted to be brought into operation through the agency of an electromagnet (24) is disposed between the two pressure medium lines (13, 14) leading to the cylinder of the final control drive — connected in each case to one of them — and receives, when the contact detector (22, 23) detects an engagement with the board, a signal to close the bypass valve (21) so that the pressure drop across the piston of the cylinder (12) is cancelled and thus the final control drive is rendered inoperative.

8. A track-guidable wheeled vehicle according to Claim 1, characterised in that the facility for controlling the force to be applied to the control roller (7) by means of the final control drive comprises a controller (18) connected by way of pressure medium lines to the ends of the two pressure chambers of the cylinder (12) and having two pressure switches (19), each associated with one pressure chamber, and at least one and preferably two pressure-limiting valves (20).

Fig.1

Fig. 2a

Fig. 2b

Fig.3